# DEMANDE DE BREVET EUROPEEN

(11) **EP 2 090 960 A1**
(43) Date de publication de la demande: **19.08.2009**
(21) Numéro de dépôt: 09001748.4
(22) Date de dépôt: 09.02.2009
(51) Int. Cl.: G06F 1/32

(54) **Procédé et dispositif d'interfaçage tactile**

(30) Priorité: 18.02.2008 FR 0851029
(71) Demandeur: Legrand France, 87000 Limoges (FR); Legrand SNC, 87000 Limoges (FR)
(72) Inventeur: Perrot, Alexandre, 38470 Vinay (FR); Rigollet, Sébastien, 26190 Saint Laurent En Royans (FR)
(74) Mandataire: Lepelletier-Beaufond, François

(57) **Abrégé**

Le dispositif d'interfaçage tactile comporte :
- un clavier (105) tactile comportant au moins un moyen de génération d'une tension (110) sous l'effet d'une déformation mécanique et
- une interface (120, 135) électronique de traitement du signal adaptée à détecter l'appui et/ou le relâchement d'un moyen de génération de tension et à se mettre en veille à la suite de l'appui et/ou du relâchement de chaque moyen de génération de tension.

Préférentiellement, le moyen de génération de tension (110) comporte un élément piézoélectrique.

Dans des modes de réalisation, l'interface électronique (120, 135) comporte au moins un dispositif de comparaison de tensions (125), la génération d'une tension de seuil paramétrable (130) à laquelle ledit dispositif de comparaison de tensions compare la tension aux bornes d'un moyen de génération d'une tension, et une carte (135) comportant une unité Centrale et son alimentation (140)

Ladite tension de seuil paramétrable peut être augmentée ou diminuée pour détecter les pics positifs et les pics négatifs d'au moins un moyen de génération de tension provoqués respectivement par un appui ou un relâchement d'au moins un moyen de génération de tension.

## Description

### DOMAINE DE L'INVENTION

La présente invention concerne un procédé et un dispositif d'interfaçage tactile. Elle s'applique, en particulier, à garantir l'autonomie des produits électroniques munis d'une interface homme-machine (« IHM ») tactile non reliés à une source d'alimentation permanente.

### ARRIERE-PLAN TECHNOLOGIQUE

Les solutions électroniques dédiées aux interfaces tactiles consomment trop de courant pour garantir une autonomie d'au moins deux ans, aux produits non reliés à une source d'alimentation permanente.

En général, les produits électroniques nomades munis d'interface tactiles non reliés à une source d'alimentation permanente, tels les baladeurs numériques, les téléphones portables, les assistants numériques personnels et les systèmes de géo-localisation, utilisent des batteries rechargeables. Concernant les technologies d'interfaces tactiles, celles dites « capacitives » sont à très basse consommation mais ne permettent toutefois pas de faire fonctionner un produit normalement, pendant au mois deux ans, sans intervention telle le remplacement de la pile, la recharge ou le remplacement d'une batterie ou la connexion du produit à une source d'alimentation.

Généralement, dans les dispositifs utilisant des capteurs piézoélectriques, seul l'appui sur l'élément piézoélectrique est utilisé. Les dispositifs qui exploitent les appuis et les relâchés du capteur piézoélectrique utilisent des unités centrales (« CPU » pour « central processing unit ») qui scrutent le signal issu du piézoélectrique, en permanence. Cela implique que l'unité centrale soit toujours active et, en conséquence, une autonomie réduite.

D'autre part, beaucoup d'applications à base d'IHM tactiles utilisent la technologie « capacitive », nécessitant un courant moyen plus élevé car l'unité centrale n'est jamais en veille. Cela n'est pas compatible avec des contraintes de consommation inhérentes aux produits fonctionnant sur des piles non rechargeables.

### OBJET DE L'INVENTION

La présente invention vise à remédier à ces inconvénients.

A cet effet, selon un premier aspect, la présente invention vise un dispositif d'interfaçage tactile, **caractérisé en ce qu**'il comporte :
- un clavier tactile comportant au moins un moyen de génération d'une tension sous l'effet d'une déformation mécanique et
- une interface électronique de traitement du signal adaptée à détecter l'appui et/ou le relâchement d'un moyen de génération de tension et à se mettre en veille à la suite de l'appui et/ou du relâchement de chaque moyen de génération de tension.

Selon un deuxième aspect, la présente invention vise un dispositif d'interfaçage tactile, **caractérisé en ce qu**'il comporte :
- un clavier tactile comportant au moins un moyen de génération d'une tension sous l'effet d'une déformation mécanique et
- une interface électronique de traitement du signal adaptée à détecter le relâchement d'un moyen de génération de tension et à se mettre en veille à la suite de chaque relâchement de chaque moyen de génération de tension.

La présente invention a ainsi l'avantage que la consommation au repos est uniquement égale à la consommation de l'interface électronique en veille, dont la consommation d'une unité centrale en veille. L'efficacité de la présente invention réside notamment dans le fait que sa consommation moyenne est extrêmement faible. En effet, l'interface électronique est active sensiblement uniquement pendant la durée de l'appui sur un moyen de génération de tension, afin d'exécuter les actions à réaliser. Le reste du temps, l'interface électronique est « endormie », le courant consommé étant un courant de veille.

Les tests de l'inventeur ont montré que, dans l'état de l'art actuel, il est, par exemple, possible d'exploiter une interface tactile possédant au moins cinq touches ayant une autonomie d'au moins deux ans pour un produit fonctionnant avec une seule pile « CR2032 » (marque déposée) du marché.

Selon des caractéristiques particulières, l'interface électronique comporte au moins un pont de résistances adapté à comparer la tension d'au moins un moyen de génération de tension à une tension correspondant à une valeur limite de détection de relâchement.

Selon des caractéristiques particulières, le moyen de génération de tension comporte un élément piézoélectrique.

On rappelle que, dans un cristal piézoélectrique, une déformation mécanique génère une tension électrique. La mise en oeuvre de tels éléments permet une fabrication à faible coût.

Selon des caractéristiques particulières, le dispositif objet de la présente invention, tel que succinctement exposé ci-dessus comporte un moyen de génération de tension par touche tactile dudit clavier.

L'appui sur chacune des touches est ainsi exploité en temps réel dès l'instant où la touche a été appuyée. Une action liée à la pression de la touche dure exactement le temps de la pression de la touche.

Selon des caractéristiques particulières, l'interface électronique est adaptée à détecter les fluctuations positives et négatives de la tension aux bornes de chaque moyen de génération d'une tension correspondant respectivement à des appuis et des relâchés sur le moyen de génération d'une tension.

On détecte ainsi précisément l'instant d'appui et celui de relâché de la touche.

Selon des caractéristiques particulières, l'interface électronique est adaptée à comparer la tension aux bornes de chaque moyen de génération d'une tension avec au moins une tension de seuil supérieure, pour détecter l'appui sur une touche associée à un moyen de génération d'une tension et avec au moins une tension de seuil inférieure, pour détecter le relâché de ladite touche.

Ainsi le signal binaire correspondant au résultat de ces deux comparaisons prend une valeur prédéterminée pendant la durée de l'appui maintenu sur le moyen de génération d'une tension.

Selon des caractéristiques particulières, l'interface électronique comporte au moins un moyen de comparaison de tensions et un moyen de modification de la tension de seuil à laquelle ledit moyen de comparaison de tensions compare la tension aux bornes d'un moyen de génération d'une tension.

Grâce à ces dispositions, un seul moyen de comparaison de tensions permet de détecter les fluctuations positives et négatives de la tension aux bornes d'un moyen de génération de tension.

Selon des caractéristiques particulières, le moyen de modification de la tension de seuil est adapté à abaisser la tension de seuil lorsqu'elle a été dépassée par la tension aux bornes du moyen de génération d'une tension.

Selon des caractéristiques particulières, ladite interface électronique comporte au moins un moyen de comparaison de tensions adapté à comparer une tension aux bornes de chaque moyen de génération de tension avec une tension de seuil, l'interface électronique étant en veille lorsque ladite tension est inférieure à ladite tension de seuil.

La mise en oeuvre de la présente invention est ainsi particulièrement simple.

Selon des caractéristiques particulières, l'interface électronique comporte une unité centrale adaptée à effectuer une action différente lors de l'appui et/ou le relâchement de chaque moyen de génération de tension.

Le dispositif objet de la présente invention permet ainsi de commander de multiples actions ou fonctions selon la ou les touches sur lesquelles un utilisateur appuie.

Selon un deuxième aspect, la présente invention vise un interrupteur, **caractérisé en ce qu**'il comporte un dispositif d'interfaçage objet de la présente invention, tel que succinctement exposé ci-dessus.

Selon un troisième aspect, la présente invention vise un variateur, **caractérisé en ce qu**'il comporte un dispositif d'interfaçage objet de la présente invention, tel que succinctement exposé ci-dessus.

Selon un quatrième aspect, la présente invention vise une télécommande, **caractérisée en ce qu**'elle comporte un dispositif d'interfaçage objet de la présente invention, tel que succinctement exposé ci-dessus.

Selon un cinquième aspect, la présente invention vise un procédé d'interfaçage tactile, **caractérisé en ce qu**'il comporte :
- une étape de détection d'un appui et/ou d'un relâchement sur un moyen de génération d'une tension d'un clavier et de réveil d'une interface électronique et
- une étape de remise en veille de ladite interface électronique.

Les avantages, buts et caractéristiques de cet interrupteur, de ce variateur et de ce procédé étant similaires à ceux du dispositif objet de la présente invention, tel que succinctement exposé ci-dessus, ils ne sont pas rappelés ici.

### BREVE DESCRIPTION DES DESSINS

D'autres avantages, buts et caractéristiques de la présente invention ressortiront de la description qui va suivre, faite, dans un but explicatif et nullement limitatif en regard des dessins annexés, dans lesquels :
- la figure 1 représente, schématiquement, un mode de réalisation particulier du dispositif objet de la présente invention,
- la figure 2 représente, schématiquement, l'évolution d'une tension aux bornes d'un élément piézoélectrique lors de l'appui et du relâchement d'une touche de clavier associée à cet élément piézoélectrique,
- la figure 3 représente un mode de réalisation particulier de l'interrupteur objet de la présente invention,
- la figure 4 représente un mode de réalisation particulier du variateur objet de la présente invention,
- la figure 5 représente un mode de réalisation particulier du dispositif objet de la présente invention intégré dans un clavier de télécommande,
- la figure 6 représente un schéma électrique d'un mode de réalisation particulier du dispositif et
- la figure 7 représente, sous forme d'un logigramme, des étapes d'un mode de réalisation particulier du procédé objet de la présente invention.

### DESCRIPTION DETAILLEE D'UN EXEMPLE DE REALISATION

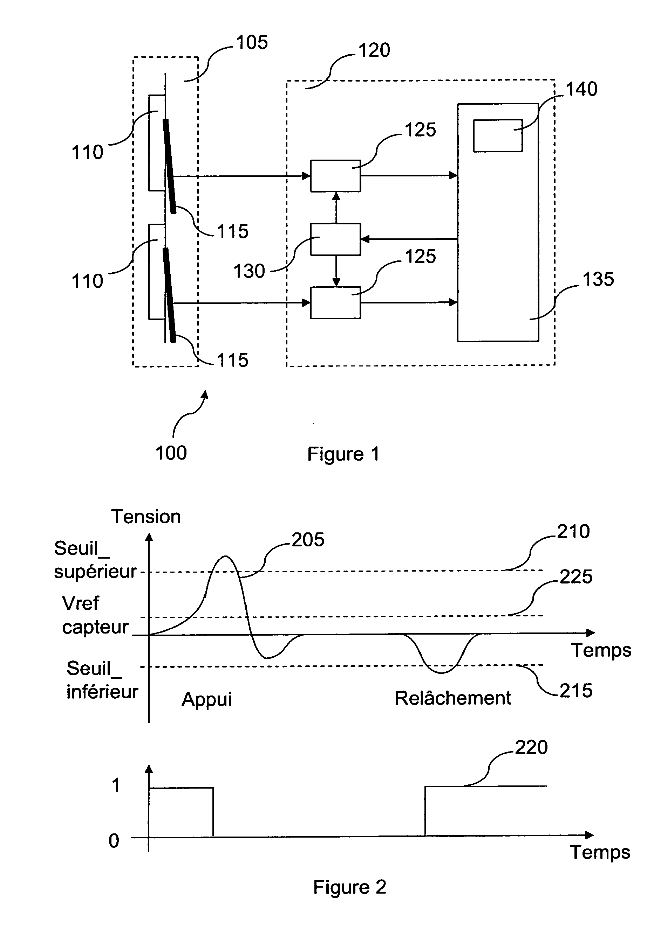

On observe, en figure 1, que, dans un mode de réalisation particulier, le dispositif 100 comporte, d'une part, un clavier 105 comportant des touches 110 et des moyens de génération de tension 115 et, d'autre part, une interface électronique 120 comportant des moyens de comparaison de tensions 125, un moyen 130 de modification de tensions de seuil appliquées aux moyens de comparaison de tensions 125 et une carte à unité centrale 135.

La carte à unité centrale 135 comporte une alimentation 140. L'unité centrale est, par exemple, à microcontrôleur, à processeur de signal numérique ou « DSP » (acronyme de Digital Signal Processor ») ou à élément comportant un processeur.

Les moyens de génération de tension 115 sont adaptés à générer une tension lorsqu'ils subissent une déformation mécanique. Préférentiellement, les moyens de génération de tension 115 comportent des éléments piézoélectriques mécaniquement associés aux touches du clavier de manière connue en soi. Par exemple, le clavier 105 est constitué d'une dalle constituée de plusieurs matériaux en sandwich, dont les matériaux des éléments piézoélectriques. Sur la face avant de ce clavier 105 sont dessinés des pictogrammes identifiant les zones où l'utilisateur doit appuyer. Sous chaque pictogramme, il y a un élément piézoélectrique. Cette dalle tactile est livrée avec une nappe souple comportant deux signaux de masse et les signaux piézoélectriques. Un connecteur permet de faire la connexion électrique avec ces signaux. On observe que chaque touche du clavier 105 est associée à un moyen de génération de tension 115, à un moyen de comparaison de tensions 125 et à une entrée de l'unité centrale 135.

Le moyen de modification de tension de seuil 130 fournit la même tension de seuil à tous les moyens de comparaison de tensions 125. Cependant, en variante, on prévoit un moyen de modification de tension de seuil par touche du clavier 105. Cette variante s'applique, en particulier, au cas où on souhaite détecter, en parallèle, l'appui sur plusieurs touches différentes.

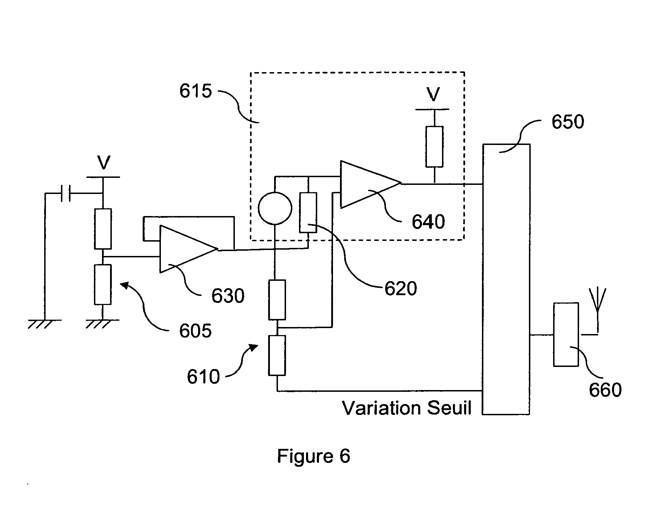

Chaque moyen de génération de tension 115 est chargée par une résistance 620 (voir figure 6), la tension résultante étant fournie à l'entrée « - » d'un moyen de comparaison de tensions 125, tandis que la tension de seuil fournie par le moyen de modification de tension de seuil 130 est appliquée aux entrées « + » des moyens de comparaison de tensions 125.

Les sorties de tous les moyens de comparaison de tensions 125 sont reliées à des entrées d'interruption d'une unité centrale 650, par exemple un élément à processeur (voir figure 6), de la carte 135. Ainsi, lorsqu'un signal de sortie d'un moyen de comparaison de tensions 125 bascule à « 0 », l'unité centrale, qui était en mode veille, se réveille. Inversement, lorsque les signaux de sortie de tous les moyens de comparaison de tensions 125 repassent à « 1 », l'unité centrale retourne en mode veille.

Le moyen de modification de la tension de seuil 130 est adapté à ce que la tension de seuil prenne, en permanence, l'une de deux tensions de seuil, dites « seuil_supérieur » et « seuil_inférieur ». Ces tensions de seuil sont choisies telles que seuil_supérieur = Vréfcapteur + E1 et seuil_inférieur = Vréfcapteur - E2, avec E1>0, E2 >0 et Vréfcapteur étant la tension de référence de l'élément piézoélectrique 115, c'est-à-dire sa tension au repos.

Le moyen de comparaison 125 compare la tension aux bornes des éléments piézoélectrique 115 à la tension de seuil, le signal issu de cette comparaison étant un signal binaire compréhensible par n'importe quelle unité centrale. Dans le mode de réalisation décrit, ce signal binaire vaut « 1 » lorsque la touche est au repos et « 0 » pendant l'appui maintenu sur la touche.

Pour chaque moyen de comparaison de tensions 125 associé à une touche 110 du clavier tactile 105, la tension issue de l'élément piézoélectrique 115 correspondant est appliquée à l'entrée « - » du moyen de comparaison de tensions 125 tandis que la tension de seuil fournie par le moyen de modification 130 est appliquée à l'entrée « + » de ce moyen de comparaison de tensions 125. Ainsi, au repos, la sortie du moyen de comparaison de tensions 125, reliée à une entrée d'interruption de l'unité centrale, vaut « 1 ». L'unité centrale est en veille et peut se réveiller dès que cette entrée bascule à « 0 ».

Le moyen de modification 130 est constitué d'une unité centrale, généralement la même que décrite précédemment, et d'un pont de résistances (voir figure 6) qui reçoit un signal issue de la sortie « variation seuil » de l'unité centrale. Lors d'un appui, la tension issue de l'élément piézoélectrique 115 devient supérieure à « seuil_supérieur » et la sortie du moyen de comparaison de tensions bascule à « 0 ». L'unité centrale se réveille et bascule immédiatement une ligne de sortie, appelée « variation seuil», à « 0 » (cette ligne est à « 1 », au repos). Cette ligne permet de modifier la tension de seuil appliquée par le moyen de modification 130 aux entrées « + » des moyens de comparaison de tensions 125, de sorte que la tension issue de l'élément piézoélectrique 115 soit supérieure au seuil (soit « seuil_inférieur »). Ainsi la sortie du moyen de comparaison de tensions 125 reste à « 0 » tant que le relâché de la touche n'a pas été détecté. Les sorties de tous les autres moyens de comparaison de tensions 125 passent aussi à « 0 » au moment du basculement de la tension de seuil, les tensions issues des moyens de génération de tensions étant tous supérieurs à « seuil_inférieur ». Dès que ce relâché intervient, la tension issue du moyen de génération de tension 115 devient momentanément inférieure à « seuil_inférieur », la sortie du moyen de comparaison de tensions 125 correspondant à la touche 105 pressée repasse donc à « 1 » et l'unité centrale repasse alors immédiatement la ligne « variation seuil» à « 1 », pour attendre un nouvel appui puisque les sorties de tous les moyens de comparaison de tension 125 rebasculent à « 1 » au moment du basculement de la tension de seuil à « seuil_supérieur ».

Ainsi, dans des modes de réalisation, l'interface électronique de traitement du signal détecte le relâchement d'un moyen de génération de tension et se met en veille à la suite de chaque relâchement de chaque moyen de génération de tension.

Dans des modes de réalisation, l'interface électronique de traitement du signal détecte l'appui et/ou le relâchement d'un moyen de génération de tension et se met en veille à la suite de chaque appui et/ou relâchement de chaque moyen de génération de tension.

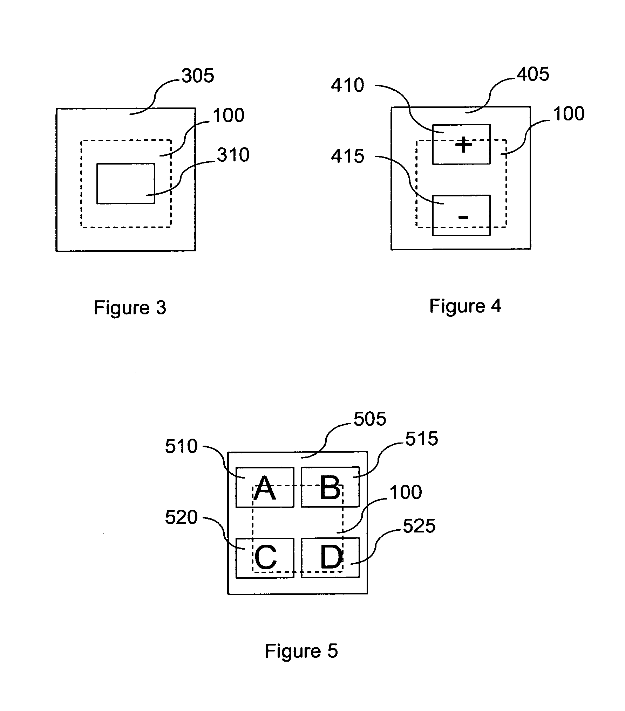

L'utilisation de moyens de comparaison de tensions 125 à très basse consommation tels que le comparateur Maxim MAX9120 (marques déposées) dont le courant de veille est de 0,45 µA à trois Volts de tension d'alimentation, permet de réaliser, par exemple, des interrupteurs (voir figure 3) ou des variateurs (voir figure 4) d'éclairage munis d'une interface tactile fonctionnant avec une pile du marché « CR2032 » ayant une autonomie de deux ans sans changement de piles.

Ainsi, le dispositif objet de la présente invention met en oeuvre un clavier tactile comportant des moyens de génération de tension, préférentiellement des éléments piézoélectriques, dans lesquels une déformation mécanique génère une tension électrique, et d'une interface électronique de traitement du signal, de très faible consommation. Cette faible consommation est obtenue d'une part, en ne faisant sortir l'interface électronique de l'état de veille que lorsqu'un élément piézoélectrique a été activé et la faisant retourner en état de veille dès que cet élément est relâché et, d'autre part, en utilisant des moyens de comparaison de tensions de faible tension.

La consommation moyenne de cette interface dépend directement du nombre de touches tactiles à exploiter, du fait du nombre de moyens de comparaison de tensions qui correspond à ce nombre de touches.

L'inventeur a, par exemple, réalisé une interface possédant au moins cinq touches ayant une autonomie d'au moins deux ans pour un produit fonctionnant avec une seule pile « CR2032 » du marché.

Un avantage de la mise en oeuvre de la présente invention est que la consommation au repos est uniquement égale à la consommation de l'interface électronique, dont la consommation de l'unité centrale en veille. L'unité centrale est réveillée lorsque le signal binaire (correspondant à la touche piézoélectrique pressée) passe de « 1 » à « 0 ». La consommation du clavier piézoélectrique étant nulle.

En variante non représentée, l'interface électronique comporte au moins un moyen de comparaison de tensions adapté à comparer une tension aux bornes de chaque moyen de génération de tension avec une tension de seuil, l'interface électronique étant en veille lorsque la tension aux bornes de chaque moyen de génération de tension est inférieure à la tension de seuil. La mise en oeuvre de la présente invention est ainsi particulièrement simple.

On observe, en figure 2, l'évolution d'un signal 205 correspondant à la tension aux bornes d'un élément piézoélectrique soumis à un appui puis à un relâchement. On observe aussi une valeur de « seuil_supérieur » 210 et une valeur de « seuil_inférieur » 215. On observe, en outre, la tension de référence « Vref capteur » 225 et un signal binaire 220 représentant le résultat d'une comparaison de la tension représentée par le signal 205 avec la valeur de seuil 210 puis, une fois cette valeur dépassée, avec la valeur de seuil 215. La tension aux bornes d'un élément piézoélectrique est égale à « Vref capteur » en l'absence de déformation mécanique sur la touche correspondante, ou en présence d'une déformation mécanique permanente.

L'interface électronique détecte le pic positif correspondant à l'appui sur une touche du clavier, lorsque la tension aux bornes du moyen de génération de tension est au dessus de « seuil_supérieur », puis le pic négatif correspondant au relâché, lorsque cette tension passe au-dessous de « seuil_inférieur ». Ainsi le signal binaire en sortie du moyen de comparaison de tensions vaut « 0 » pendant la durée de l'appui maintenu sur la touche associée à l'élément piézoélectrique comme illustré en figure 2.

Le changement de tension de seuil est effectué par la carte à unité centrale dès qu'elle sort de l'état de veille, c'est-à-dire dès qu'un moyen de comparaison de tensions 125 détecte que la tension aux bornes d'un élément piézoélectrique dépasse la valeur de « seuil_supérieur ». La valeur de « seuil_inférieur » devient alors la tension de référence pour tous les moyens de comparaison de tensions 125.

Au repos, en l'absence d'appui sur l'une des touches du clavier, les tensions aux bornes des éléments piézoélectriques sont égales à Vréfcapteur et les sorties de tous les moyens de comparaison de tensions sont au niveau « 1 ».

Lors d'un appui sur une touche du clavier, la tension aux bornes de l'élément piézoélectrique correspondant forme un pic positif qui dépasse la valeur « seuil_supérieur ». En effet, au moment de l'appui sur un capteur piézoélectrique, il y a génération de charges électriques qui vont circuler dans la résistance 620 : cela génère un pic de tension sur la tension.

La sortie du moyen de comparaison de tensions correspondant bascule alors au niveau « 0 », lorsque la tension aux bornes de l'élément piézoélectrique franchit la valeur « seuil_supérieur ». L'unité centrale se réveille alors immédiatement et commande le signal de contrôle de la tension de seuil pour y affecter la valeur « seuil_inférieur ». Après avoir dépassé la valeur « seuil_supérieur », la tension aux bornes de l'élément piézoélectrique redevient égale à « Vref capteur » pendant l'appui maintenu sur la touche, la valeur « Vref capteur » étant supérieure à la nouvelle tension de seuil, « seuil_inférieur ». La sortie du moyen de comparaison de tensions reste donc au niveau « 0 » et l'unité centrale reste donc éveillée et exécute une action qui a été programmée pour l'appui sur la touche considérée.

Au moment de l'arrêt de l'appui sur la touche, la tension aux bornes de l'élément piézoélectrique correspondant forme un pic négatif qui franchit, en descendant, la valeur « seuil_inférieur ». En effet, au moment du relâché du capteur piézoélectrique, il y a un transfert de charges électriques dans l'autre sens que celui correspondant au début de l'appui et donc génération d'un pic de tension négatif.

Le signal de sortie du moyen de comparaison de tensions correspondant passe donc à « 1 », ce qui fait basculer immédiatement le signal de contrôle « variation seuil » à « 1 » et fait affecter la valeur « seuil_supérieur » à la tension de seuil. Ainsi, tous les autres moyens de comparaison de tensions fournissent, à nouveau, le même signal de sortie « 1 », chaque tension aux bornes de l'un des éléments piézoélectriques étant égale à « Vref capteur », soit entre « seuil_inférieur » et « seuil_supérieur ».

L'unité centrale passe alors à l'état de veille, réduisant ainsi au minimum la consommation électrique.

On observe, en figure 3, un interrupteur 305 comportant le dispositif 100 illustré en figure 1. L'appui sur une touche 310 permet la commutation d'un état à un autre de l'interrupteur. On observe, en figure 4, un variateur 405 comportant le dispositif 100 illustré en figure 1. L'appui sur une touche « + » 410 permet de commander l'accroissement d'un signal de commande, par exemple d'intensité lumineuse. L'appui sur une touche « - » 415 permet de commander la diminution du signal de commande. On observe, en figure 5, une télécommande 505 comportant le dispositif 100 illustré en figure 1. L'appui sur des touches 510 à 525 permet de télécommander un appareil distant, par exemple une alarme, un portier électrique ou des moteurs d'une installation domotique.

En figures 3 à 5, le dispositif 100 est représenté en traits discontinus car il se trouve derrière la face avant de l'interrupteur, du variateur ou de la télécommande, respectivement.

Ainsi, grâce à l'interface électronique 120 on peut associer la réalisation d'actions précises (comme l'allumage d'une source de lumière ou la variation de sa commande) durant le maintien appuyé sur une touche 110 du clavier 105. On peut aussi associer ces actions uniquement aux signaux de début d'appui et/ou de relâcher des touches 110.

En ce qui concerne le variateur 405 illustré en figure 4, on peut ainsi augmenter la luminosité d'une source de lumière progressivement, en maintenant le doigt appuyé sur la touche « + » et diminuer progressivement la luminosité en maintenant le doigt appuyé sur la touche « - ».

En figure 6, on n'a représenté que les composants concernant une touche de clavier. Pour constituer un dispositif mettant en oeuvre plusieurs touches, on duplique les composants entourés par un trait discontinu. Cependant, les entrées de l'unité centrale qui concernent les différentes touches sont différentes.

On observe, en figure 6, que la tension de référence des éléments piézoélectriques 615 est constituée par un premier pont de résistances 605 suivi d'un amplificateur opérationnel 630 monté en suiveur. Un deuxième pont de résistances 610 relié en ses bornes à la sortie de l'amplificateur opérationnel 630 et à la commande de seuil « variation seuil » provenant d'une unité centrale 650 fournit la tension de seuil, « seuil_supérieur » ou « seuil_inférieur », à un moyen de comparaison de tensions 640 qui reçoit, par ailleurs, la tension aux bornes de l'élément piézoélectrique 615. Le signal de sortie du moyen de comparaison de tensions 640 est relié à une entrée d'interruption de l'unité centrale 650. L'unité centrale 650 est reliée à un circuit communiquant radiofréquence 660, pour émettre des signaux radiocommunicants.

Dans une implémentation particulière, la tension d'alimentation, V, est égale à 3,3 Volts. Les deux résistances du premier pont de résistances 605 étant égales, la tension de référence est de 1,65 Volts. La résistance du deuxième pont de résistances 610 reliée à la tension de référence étant égale à 7,5 % de la résistance reliée à la sortie « variation seuil » de l'unité centrale 650, lorsque le signal « variation seuil » a la valeur logique « 1 », c'est-à-dire vaut 3,3 Volts, la tension de seuil « seuil_supérieur » vaut 1,77 Volts et lorsque le signal « variation seuil » a la valeur logique « 0 », c'est-à-dire vaut 0 Volts, la tension de seuil « seuil_inférieur » vaut 1,53 Volts.

En choisissant des résistances élevées, les deux ponts diviseurs consomment, au total, 0,24 µA. En utilisant un moyen de comparaison de tensions constitué d'un comparateur Maxim MAX9120 (marque déposée), qui consomme environ 0,45 µA sous 3V en veille et un amplificateur opérationnel Maxim MAX4464 (marque déposée) consomme 0,75 µA sous 3V. Pour un dispositif à N touches et donc N moyens de comparaison de tension, le courant consommé, en veille, est donc égal à (0,24 + N x 0,45 + 0,75) µA, auquel il faut ajouter le courant de consommation d'une unité centrale en veille, soit moins de 1 µA pour un microcontrôleur.

En regard de la figure 6, le moyen de modification de la tension de seuil à laquelle le moyen de comparaison de tensions 640 compare la tension aux bornes d'un moyen de génération de tension 615 est constitué du pont de résistances 610 dont un point est relié à une sortie binaire (« variation seuil ») de l'unité centrale 650, ce qui confère deux valeurs de tension de seuil possibles.

On note que, en variante, les moyens de comparaison sont incorporés dans l'unité centrale 650. On évite ainsi plusieurs composants, ce qui réduit le coût et la consommation du dispositif.

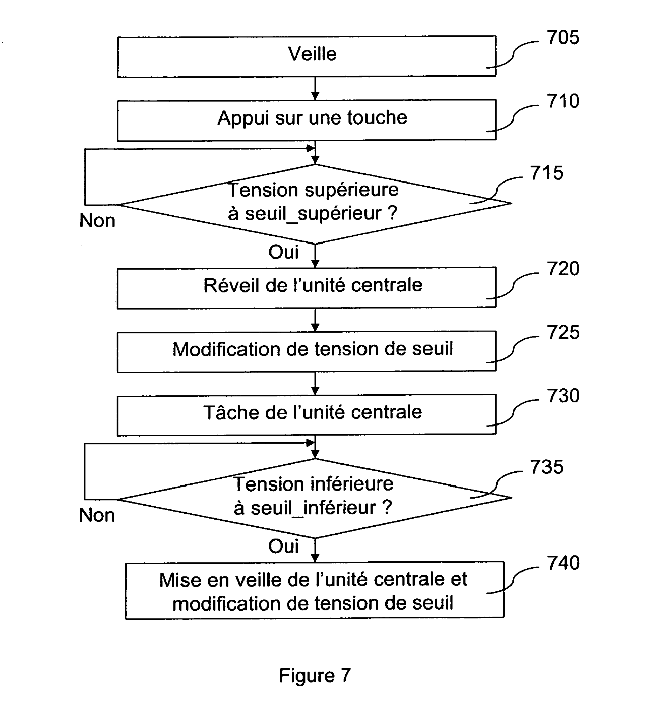

On observe, en figure 7 qu'un dispositif objet de la présente invention est dans un état initial de veille, au cours d'une étape 705.

Au cours d'une étape 710, un utilisateur effectue un appui sur une touche du clavier du dispositif.

Au cours d'une étape 715, on détermine si la tension aux bornes de chaque moyen de génération de tension est supérieure à la valeur « seuil_supérieur ». Si non, on retourne à l'étape 715. Si oui, au cours d'une étape 720, on réveille une unité centrale.

Au cours d'une étape 725, l'unité centrale modifie la tension de seuil que l'on compare à la tension aux bornes du moyen de génération de tension pour lequel on a détecté, au cours de l'étape 715, le franchissement de la tension de seuil initiale (« seuil_supérieur »). La nouvelle tension de seuil a pour valeur « seuil_inférieur ».

Au cours d'une étape 730, l'unité centrale effectue une tâche liée à la touche sur laquelle un appui est réalisé depuis l'étape 710. Par exemple, l'unité centrale modifie l'état d'un interrupteur ou d'un variateur pour faire croître ou décroître un signal, par exemple de commande d'éclairage, d'un moteur, d'un actionneur, d'un système électronique ou informatique.

Puis, au cours d'une étape 735, on détermine si la tension aux bornes de chaque moyen de génération de tension est inférieure à la valeur « seuil_inférieur ». Si non, on retourne à l'étape 730. Si oui, au cours d'une étape 740, on met l'unité centrale en veille.

En variantes, la mise en veille de l'unité centrale est différée par elle, par exemple pour qu'elle finisse une tâche ou mette en mémoire des valeurs de paramètres utiles pour son prochain réveil. En variante, lorsqu'un utilisateur appuie sur une touche du clavier, cela déclenche une action après une durée définie. L'unité centrale, lorsqu'elle est réveillée par un signal de sortie d'un des moyens de comparaison de tension, peut décider d'agir tout de suite ou d'attendre.

En variantes, lorsqu'un utilisateur appuie sur une touche, cela déclenche une action commandée par l'unité centrale puis une mise en veille automatique de l'unité centrale. Dans des variantes, on ne tient compte que de l'appui sur une touche ou que du relâché de la touche pour effectuer une action. Une seule valeur de tension de seuil peut alors être mise en oeuvre. Dans des variantes, lorsqu'un utilisateur relâche la touche, cela déclenche une nouvelle action et une nouvelle mise en veille. Deux tensions de seuil sont alors mises en oeuvre et maintenues pendant les phases de veille.

La présente invention s'applique à tous les dispositifs susceptibles de comporter une interface tactile.

## Revendications

1. - Dispositif (100) d'interfaçage tactile, **caractérisé en ce qu'**il comporte :
- un clavier (105) tactile comportant au moins un moyen de génération d'une tension (110, 310, 410, 415, 510, 515, 520, 525, 615) sous l'effet d'une déformation mécanique et
- une interface (120, 135, 605, 610, 630, 640, 650) électronique de traitement du signal adaptée à détecter l'appui et/ou le relâchement d'un moyen de génération de tension et à se mettre en veille à la suite de l'appui et/ou du relâchement de chaque moyen de génération de tension.

2. - Dispositif selon la revendication 1, **caractérisé en ce que** le moyen de génération de tension (110, 310, 410, 415, 510, 515, 520, 525, 615) comporte un élément piézoélectrique.

3. - Dispositif selon l'une quelconque des revendications 1 ou 2,
**caractérisé en ce qu'**il comporte un moyen (110, 310, 410, 415, 510, 515, 520, 525, 615) de génération de tension par touche tactile dudit clavier.

4. - Dispositif selon l'une quelconque des revendications 1 à 3,
**caractérisé en ce que** l'interface (120, 135, 605, 610, 630, 640, 650) électronique est adaptée à détecter les fluctuations positives et négatives de la tension aux bornes de chaque moyen (110, 310, 410, 415, 510, 515, 520, 525, 615) de génération d'une tension correspondant respectivement à des appuis et des relâchés sur le moyen de génération d'une tension.

5. - Dispositif selon l'une quelconque des revendications 1 à 4,
**caractérisé en ce que** l'interface (120, 135, 605, 610, 630, 640, 650) électronique est adaptée à comparer la tension aux bornes de chaque moyen (110, 310, 410, 415, 510, 515, 520, 525, 615) de génération d'une tension avec au moins une tension de seuil, dite « supérieure », pour détecter l'appui sur une touche associée à un moyen de génération d'une tension et avec au moins une tension de seuil dite « inférieure », pour détecter le relâché de ladite touche.

6. - Dispositif selon la revendication 5, **caractérisé en ce que** l'interface électronique (120, 135, 605, 610, 630, 640, 650) comporte au moins un moyen de comparaison de tensions (125, 640) et un moyen de modification (130, 610, 650) de la tension de seuil à laquelle ledit moyen de comparaison de tensions compare la tension aux bornes d'un moyen de génération d'une tension.

7. - Dispositif selon la revendication 6, **caractérisé en ce que** le moyen de modification (130, 610, 650) de la tension de seuil est adapté à abaisser la tension de seuil lorsqu'elle a été dépassée par la tension aux bornes d'un moyen de génération d'une tension et à augmenter la tension de seuil lorsqu'elle a été franchie en descendant par la tension aux bornes dudit moyen de génération d'une tension.

8. - Dispositif selon l'une quelconque des revendications 1 ou 2,
**caractérisé en ce que** ladite interface (120, 135, 605, 610, 630, 640, 650) électronique comporte au moins un moyen de comparaison de tensions (125, 640) adapté à comparer une tension aux bornes de chaque moyen (110, 310, 410, 415, 510, 515, 520, 525, 615) de génération de tension avec une tension de seuil, l'interface électronique étant en veille lorsque la tension aux bornes de chaque moyen de génération de tension est inférieure à ladite tension de seuil.

9. - Dispositif selon l'une quelconque des revendications 1 à 8,
**caractérisé en ce que** l'interface (120, 135, 605, 610, 630, 640, 650) électronique comporte une unité centrale (650) adaptée à effectuer une action différente lors de l'appui et/ou le relâchement de chaque moyen de génération de tension (110, 310, 410, 415, 510, 515, 520, 525, 615).

10. - Interrupteur (305), **caractérisé en ce qu'**il comporte un dispositif (100) d'interfaçage selon l'une quelconque des revendications 1 à 9.

11. - Variateur (405), **caractérisé en ce qu'**il comporte un dispositif (100) d'interfaçage selon l'une quelconque des revendications 1 à 9.

12. - Télécommande (505), **caractérisée en ce qu'**elle comporte un dispositif (100) d'interfaçage selon l'une quelconque des revendications 1 à 9.

13. - Procédé d'interfaçage tactile, **caractérisé en ce qu'**il comporte :
- une étape (715) de détection d'un appui et/ou d'un relâchement sur un moyen (110, 310, 410, 415, 510, 515, 520, 525, 615) de génération d'une tension d'un clavier (105) et de réveil d'une interface (120, 135, 605, 610, 630, 640, 650) électronique et
- une étape (735) de remise en veille de ladite interface électronique.
